# EUROPEAN PATENT APPLICATION

(11) **EP 2 695 658 A2**
(43) Date of publication of application: **12.02.2014**
(21) Application number: 13002812.9
(22) Date of filing: 31.05.2013
(51) Int. Cl.: B01D 46/24, B01D 46/00

(54) **Integrated separating cartridge**

(30) Priority: 06.06.2012 IT MI20120981
(71) Applicant: ING. ENEA MATTEI S.p.A., 20090 Vimodrone, Milano (IT)
(72) Inventor: Contaldi, Giulio Francesco, 20068 Peschiera Borromeo, Milano (IT)
(74) Representative: Petruzzelli, Antonio

(57) **Abstract**

The present patent for invention is aimed at protecting a system of separation and/or filtering, preferably to be used within the field of compressors, intended for the reciprocal separation of at least two components of a mixture composed of at least two substances at least partially in the fluid state, which allows a significantly higher efficiency to be achieved in the overall separation of said mixture with respect to known solutions, and which also comprises an efficient as well as simple method of recovery of at least one of said substances or species separated.

## Description

The present patent for invention is aimed at protecting a system of separation and/or filtering, preferably to be used within the field of compressors, intended for the reciprocal separation of at least two components of a mixture flow composed of at least two substances, which allows a significantly higher efficiency to be achieved in the overall separation of said mixture with respect to known solutions, and which also comprises an efficient as well as simple method of recovery of at least one of said separated substances.

The process of compression of any fluid, in particular of a gas, which can be for example air, usually entails also a certain increase in temperature which can be damaging for the mechanical components of the system intended to determine the increase in pressure. In fact the thermal deformations generated by this increase in temperature, going to combine with those attributable to inertia stresses, deriving mostly from the centrifugal force, can increase excessively the state of strain inside the structure of the rotating elements.

Therefore, in order to increase the tightness of these rotating elements and obtain therefore adequate cooling of the gas subjected to compression, it is very widespread to provide for the injection of a cooling liquid, for example oil, into the compressor, also in order to obtain a certain lubrication of the zones of contact between several elements.

Moreover the increase in temperature is damaging also as regards the thermodynamic efficiency of the compression itself which, as known, is more efficient the closer it is to an isothermal transformation. From this point of view the injection of oil during the process of compression performs the important task of thermal moderator.

Moreover the presence of liquid in the gas emitted by the compressor has to be almost totally eliminated, in that almost all the applications downstream of the same require this gas to be mixed as least as possible with other substances. The separation between liquid and gas constituting the mixture, hereinafter, by way of an example, oil and air respectively, generally takes place in several phases, corresponding to the transit of the same mixture through several volumes or chambers in each of which there is at least one separating and/or filtering means.

The first phase, referred to as "primary", for compressors of limited power, approximately up to 50-60 kW, is usually performed by forcing the flow of air-oil, exiting the compressor, to traverse a winding path and/or provided with obstacles, such as sharp bends for example. Said obstacles tend to slow down most through friction the heaviest component of the mixture, which in this case is the oil, so as to cause the impact and adhesion thereof to the structural elements which define this winding path, as well as the consequent falling through gravity. Said primary phase usually takes place in the chamber where the compressor is housed, preferably in the immediate vicinity and above the stator.

The primary phase performed in this way can arrive at a separation efficiency of up to 99.9%, which means, considering a flow rate of oil of 100 litres per minute, that at the end of this primary phase a residue thereof of just 0.1 litres per minute remains. Despite the numerical importance of this result the requirements of the more common applications downstream of the compressors require the reduction as far as possible, even if small, of the oil residue, which could cause damage on the line of compressed air downstream, or in any case worsen the efficiency of these subsequent applications.

Therefore there is a widespread need to subject the flow of the mixture to a further two phases of separation, referred to respectively as "intermediate" and "final". To this end said flow is conveyed into an intermediate chamber, communicating with that of the compressor, wherein there is another separating means, which provides for the slowing down and separating, usually again mechanically, of a further portion of oil. This intermediate chamber is preferably in communication also with a collector aimed at the recovery of the oil coming from this separating means and poured towards the lower part of the same chamber, where in fact the entry section of this collector is located.

The second of these further two phases of separation, known as "final", is preferably performed by means of at least one other filtering and/or separating means composed of a preferably cylindrical separating cartridge, or candle, situated in an end chamber, in communication with and adjacent to the previous intermediate chamber. The side cylindrical thickness of this cartridge is preferably made up of at least the following parts or layers: one, made up of perforated metal sheet, provides for the load-bearing structural functions, allowing in any case the passage of the mixture, while another, composed at least of a filtering surface in glass fibre with suitable resin, is suitable for the separation and/or filtering of the oil. These layers can be embraced, at both ends, or the bottoms of the cylindrical cartridge, respectively by two cylindrical bases made in plastic or metal, whereof at least one provided with at least one central hole for allowing the passage of the flow of the mixture.

The latter, having entered the cartridge axially, and subsequently prevented from continuing to flow in the same direction due to the presence of the other base, is forced to exit radially from the same cartridge due to the effect of the pressure, traversing the side thickness thereof and therefore making the relative filtering layer provide for the slowing down and separating further of at least another part of the oily residue remaining in the mixture. The outermost layer of the thickness of the cartridge is moreover composed preferably of a sock or sheath made in synthetic and absorbent material, intended to collect the oil separated by said filtering layer, to then allow the dripping and consequent recovery thereof which takes place by means of another collector connected to the lower part of said end chamber.

By subjecting the flow in output from the compressor to these phases of separation it is usually possible to obtain a residue of oil of approximately 3-5 ppm (3-5 parts per million).

The object of the present invention is therefore that of providing a system of filtering and/or separation of a mixture composed of at least two substances or species at least partially in the fluid state and preferably exiting a compressor, which allows the reciprocal separation of at least two components of said mixture so as to obtain a residue, relative to the substance which it is to be separated, even more reduced than that which can be obtained with the systems widespread at the state of the art in the field of air compressors.

Moreover the baffles which constitute the winding path suitable for subjecting the mixture to the phase of primary separation, in order to obtain a sufficiently small oil residue, require very costly machining operations, otherwise efficiency of the same is lost. It therefore becomes advantageous to be able to save on these machining operations by compensating this loss of efficiency by means of the improvement of the subsequent phases of separation, in such a way as to obtain a decrease in the overall cost of the whole system.

Another object of the present invention therefore is that of providing a system which allows a saving in the costs of the machining operations required by the mechanical components suitable for performing the primary separation phase, without affecting the performance of the overall oil removal process.

These objects are obtained by means of:
- the replacement of the simple separating cartridge already known and whereto final separation is preferably assigned, with another one integrated with a further filtering means, hereinafter also referred to as first filtering means, and with at least one means, hereinafter referred to as recovery means, able to recover or collect at least one substance separated by this first filtering means, said recovery means being at least partially integral with at least one other component of the system, also not necessarily described further on, but in any case suitable at least for comprising it at least partially;
- the presence of an inclined surface which, thanks to the gravity, collects at least one substance separated by this first filtering means and tends to move it towards said recovery means and in a direction at least partially opposite the flux of the mixture;
- one barrier placed on said inclined surface which makes it very difficult the overflow of at least said substance into the cartridge.

More generically, also considering that the present invention can be used outside of the process described, the same consists mainly of the combination of at least one filtering means, or first filtering means, with at least one other filtering means, hereinafter also referred to as filtering body, whereto the end separation is preferably assigned and which corresponds, in the previous description, to the separating cartridge suitable for performing the final separation. The separating action of said first filtering means, in the diagram described previously, is therefore placed preferably between the intermediate phase and the final one, since the flow of the mixture transits through said first filtering means after having exited the intermediate chamber, and before entering the separating cartridge, placed mostly in the end chamber.

This combination consists physically at least of the fact that the reciprocal movement between said first filtering means and said filtering body is at least partially limited or restrained by means at least of an element adequate for this purpose, hereinafter referred to as positioning element.

Said first filtering means is therefore at least partially maintained in a certain position, with respect to said filtering body, by means of said positioning element, which can be distinct from these filtering body and first filtering means or at least part of one of the two or of both. Moreover this filtering body defines at least partially at least part of a conduit and can be composed, like also said positioning element, of several distinct parts connected in a known manner, and at least one part of said filtering body comprises at least one filtering surface.

Said first filtering means can therefore be at least partially restrained at least to said positioning element or at least to said filtering body. This at least partial restraint between said first filtering means and at least one of said filtering body and positioning element has to be understood, as regards the solutions proposed, also in the more generic sense of the term, or also only as an at least partial limitation of the potential reciprocal movement of the restrained components, said movement not in any case being preferably provided during the use of the present invention. For example this at least partial restraint can also consist only of the fact that said filtering body and at least one of said first filtering means and positioning element are maintained adjacent or fairly close by means of at least one appropriate means, or that they are connected physically, or are in physical continuity, through at least one other element placed between the two.

Again this at least partial restraint can also be formed by means of at least one known connection system, continuous or discontinuous, disassemblable or permanent, intending by permanent a connection which, if open, entails with all probability the damaging of at least one of the components connected thereby. Solely by way of explanation, for example, gluing, which is continuous, and, within certain limits, riveting, which is discontinuous, can be considered as permanent connections.

Said first filtering means can at most be part of said filtering body and in this case can in any case be considered at least partially restrained to the same: it can be noted, in fact, that a single object can also be considered as ideally divided into at least two components completely integral and integrated one with the other, and therefore reciprocally at least partially restrained. In any case, in the possible embodiments described in detail subsequently, filtering body and first filtering means constitute two distinct components.

Given that, as mentioned, the application of the present invention to the process of separation described previously provides preferably for the filtering effect given by this first filtering means to take place between the intermediate and final phases of separation, the same is located at least partially in the intermediate chamber and/or at least partially in the end one, or, again, between the two.

The other features of the present invention are the following:
- said first filtering means is in the vicinity and above at least one surface at least partially inclined with respect to the direction of the flow of the mixture and with respect to the direction of gravity;
- said inclined surface, which is intended to receive the at least one substance captured by said first filtering means and poured therefrom, can be at least partially integral with said support or in any case with at least one other component of the system suitable for comprising it;
- the outward normal to at least a part of said surface is oriented toward the outside of the cartridge, so as by means of its inclination at least a part of said surface tends to impress on at least one substance poured thereon a velocity, relative to the flow of the mixture entering in said first filtering means, whose component in the direction and in the course of the same flow is negative;
- said recovery means is an opening or open section of entry in a collector for the recovery of said substance, hereinafter also referred to as intermediate collector and which can be considered additional with respect to those described previously;
- at least a part of said inclined surface is oriented towards said open section of entry in the intermediate collector;
- said inclined surface presents or comprehends at least one barrier to the possible overflow of said substance into said filtering body, consisting in at least one mathematically continuous or discontinuous abrupt change of the slope of the same surface.

Preferably, but not exclusively, the present invention at least provides that:
- said filtering body is an at least partially cylindrical separating cartridge, already known and described previously, whose side thickness is formed by several layers, whereof at least one is made up at least partially of a filtering surface preferably in glass fibre with suitable resin or in another adequate material;
- said cartridge defines at least partially at least one cavity which can be considered at least part of a conduit which is at least partially closed at least on one side, or by means of a component distinct from said cartridge or by means of the configuration of the same cartridge;
- said first filtering means is a plaited wire mesh, hereinafter also referred to as aggregate, and is completely separated from said cartridge;
- said aggregate is made up at least partially of stainless steel or another metal or plastic or vitreous material or another suitable material;
- said positioning element, which provides for maintaining in a certain position said aggregate with respect to said cartridge, is a support or stand which can be considered a base, and which can be at least partially restrained in a known manner to said cartridge and/or to another external system which can be the intermediate chamber;
- said aggregate can be at least partially inserted in a cavity or hole or opening formed in said positioning element;
- said aggregate can also be at least partially inside the cavity defined by said cartridge, or in any case at least partially inside the same cartridge;
- at least one of said cartridge and support comprises at least one means for the attachment to a system external thereto, which preferably is the intermediate chamber, said means for the attachment being able to be constituted at least by a threading and/or be set up for a bayonet connection;
- said open section of said intermediate collector is approximately in front of the aggregate, with respect to the direction of movement of said flow of the mixture, or, considering the diagram described previously, either on the side of the aggregate turned towards to the intermediate chamber or in any case at least approximately at the same level as the same aggregate.

The use of the present invention consists preferably of a process of filtering and/or separation of the mixture exiting the compressor, for example air-oil, which provides at least one of the following phases or events, whereof at least two can be also at least partially simultaneous:
- at least part of the mixture traverses at least partially said aggregate;
- at least part of the oil separated by this aggregate moves with respect thereto due to gravity or due to another cause, and subsequently comes into contact with said inclined surface;
- at least part of the oil separated by the aggregate, acquires, due to gravity or due to another cause, a velocity relative to the flow of the mixture, the component of that velocity along the course and in the direction of said flow being negative, and moves on said inclined surface towards the entry section of the intermediate collector, to then enter the same;
- at least part of said mixture enters at least partially the conduit defined by the cartridge;
- at least part of said mixture exits radially therefrom, preferably through the effect of the pressure, traversing at least partially the relative filtering surface.

Following numerous experiments carried out it has been ascertained that by means of the application of the present invention to the process of separation in several phases described previously, a final oil residue can be obtained of approximately 0.5 ppm, which is a significantly improved result with respect to what can be obtained with systems already known. This improvement is owing both to the separating action of the aggregate and to the fact that the latter, also thanks to the intermediate collector which recovers the oil retained thereby and to the barrier of the inclined surface, reduces the relative content of oil entering and therefore also exiting the cartridge, considering that the efficiency of separation of the latter is approximately constant with respect to the relative content of oil entering.

Alternatively the present invention allows the possibility of accepting a lower primary separation efficiency, consequent to a desirable saving in the relative costs of machining of the components intended therefor, while maintaining an efficiency of separation of the overall system at the levels of the known solution described previously, without both the aggregate and the intermediate collector.

The technical aspects of the preferred embodiment, whereto constructional changes may be made without departing from the more general scope of protection according to what is expressed by the claims, will be made clearer by the following detailed description, given by way of a non-limiting example of the more general concepts claimed.

The description refers to the accompanying drawings, in which:
- Figure 1 is a side sectioned view of a possible embodiment of the present invention;
- Figure 2 is a view of the present invention along section 2-2 of Figure 1.

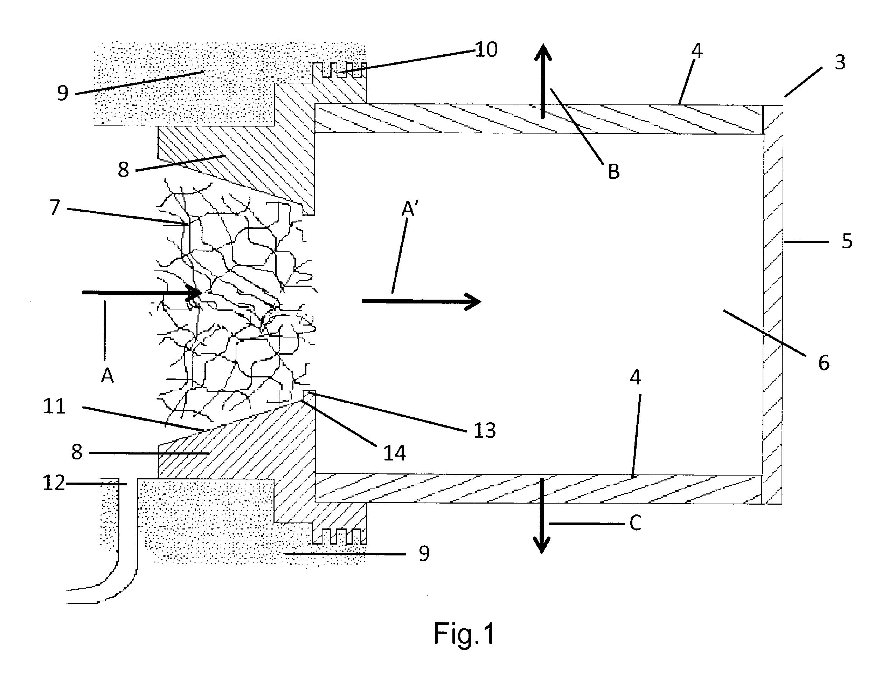

Referring to Figure 1, the cylindrical separating cartridge 3, seen sectioned, is made up of the relative side thickness 4 and of the rear base 5, which provides for closing the conduit 6 defined by said side thickness 4, said conduit traversing completely said cartridge 3, thus resulting as passing through the same. Said side thickness 4 is in turn obtained from the combination of several cylindrical and concentric layers whereof at least one performs a structural function, at least one is a mesh or filtering surface, and at least one, preferably the outermost one, is made in absorbent material and serves to retain the oil slowed down by said filtering layer. The first of these aforementioned layers, which is the innermost one, is preferably a perforated metal sheet; the second is made with a mesh in glass fibre and suitable resin or in another appropriate material; the third, which is the outermost one, is a sock or sheath, also perforated and made in absorbent synthetic material, intended therefore to retain the slowed-down oil, which subsequently pours through gravity downwards along the surface of the same.

The aggregate 7 is restrained at least partially, in a known manner and with known means, to the appropriately shaped support 8 which is in turn at least partially restrained in a known manner and with known means to the structure of the intermediate chamber 9, identified by dots. This restraint between aggregate 7 and support 8 is formed by means of at least one known connection system which can be continuous or discontinuous, and disassemblable or non-disassemblable, intending by non-disassemblable a permanent connection and which therefore cannot be at least partially released without causing permanent damage to the systems connected. The cartridge 3, while located mostly inside the end chamber, is, in this embodiment, restrained in a known manner to the support 8, which in turn is restrained to the structure of the intermediate chamber 9, for example by means of a coupling with threading 10.

The flow of mixture, which comes from the intermediate chamber along the arrow A, traverses the aggregate 7 to then enter axially the cartridge 3 along the arrow A'. During the traversing of the aggregate 7 the latter tends moreover to uniform the profile of velocity of said flow along the line transversal to the same, which facilitates the process of retaining and therefore of separation of the oil.

Subsequently, by means of the closure of the conduit 6 inside the cartridge 3 itself, this flow is forced to traverse the side thickness thereof approximately along the arrows B and C, undergoing the separating and/or filtering effect thereof.

The rear base 5 can be fully integrated in the cartridge 3, according to what can be read in the previous more generic description, or in any case be at least partially restrained thereto in a known manner.

In order to identify this embodiment in the previous description the separating cartridge 3 corresponds to said filtering body which defines said at least one conduit 6, the aggregate 7 corresponds to said first filtering means, while the support 8 corresponds to said positioning element.

The oil captured and restrained by the aggregate 7 pours downwards until falling on the inclined surface 11, which in this embodiment belongs to the support 8, but which can be at least in part integral with at least one other component suitable at least for comprising it at least partially, this component being able to correspond or otherwise to one of those described. The inclination of this surface 11 therefore determines the sliding of the oil as far as the entry section 12 of the intermediate collector which, preferably due also to difference in pressure, therefore provides for recovering it.

As is known, the possible embodiment of Figure 1 provides for the intermediate collector to be situated in front of the aggregate 7, with respect to the direction of flow of the mixture.

The surface 11 comprehends at least one barrier 13, which is suitable for avoiding that the oil possibly accumulated seeps inside said cartridge 3. This barrier is originated by at least one sharp edge 14 consisting physically of at least one change of the slope of said inclined surface 11, in the figure mathematically discontinuous, yet which can also be continuous.

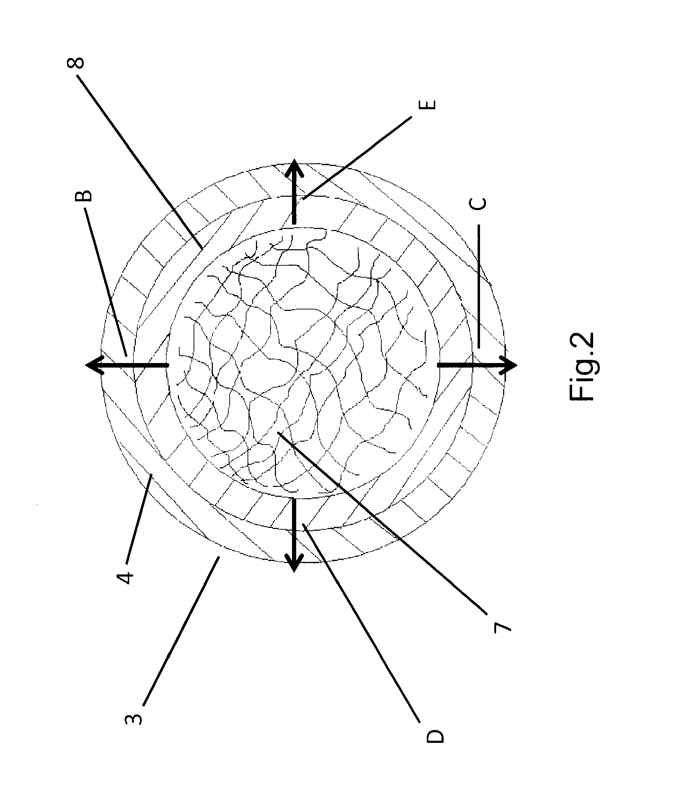

Figure 2, perpendicular to the axis of the cartridge 3, shows in section from behind both the side thickness 4 of the same cartridge 3 and that of the support 8, as well as part of the wire mesh or aggregate 7 viewed frontally. Arrows B, C, D, E give an example approximately of the direction of the flow of air-oil, when it traverses this cartridge 3 radially.

Constructional changes can be made to the invention presented, and/or also concerning the process of use of the same, in any case coming within the sphere of protection of the present patent according to what is stated in the claims.

## Claims

1. System of separation and/or filtering, preferably to be used in the field of compressors, intended for the reciprocal separation of at least two components of an at least partially fluid mixture flow composed of at least two substances, comprising at least one filtering body (3) which defines at least partially at least part of a conduit (6) and which comprises at least one filtering surface, said filtering body (3) preferably being a separating cartridge, **characterised in that** said system:
- is constituted by the combination of this filtering body (3) with at least one further first filtering means (7) which is at least partially maintained in a certain position with respect to this filtering body (3), by means of at least one positioning element (8);
- comprises at least one recovery means (12), able to recover at least one of said substances;
and **characterised in that**:
- said first filtering means is in the vicinity and above at least one surface (11) at least partially inclined with respect to the direction of the flow of the mixture and with respect to the direction of gravity;
- said inclined surface (11), which is intended to receive the at least one substance captured by said first filtering means (7) and poured therefrom, can be at least partially integral with said support (8) or in any case with at least one other component of the system;
- the outward normal to at least a part of said inclined surface (11) is oriented toward the outside of the cartridge, so as by means of its inclination at least a part of said inclined surface (11) tends to impress on at least one substance poured thereon a velocity, relative to the flow of the mixture entering in said first filtering means, whose component in the direction and in the course of the same flow is negative;
- said recovery means (12) is an opening or open section of entry in an intermediate collector for the recovery of said substance;
- at least a part of said inclined surface (11) is oriented towards said open section of entry in the intermediate collector;
- said inclined surface (11) presents or comprehends at least one barrier (13) to the possible overflow of said substance into said filtering body (3), consisting in at least one mathematically continuous or discontinuous abrupt change of the slope of the same inclined surface (11).

2. System according to claim 1, **characterised in that** said first filtering means (7) and filtering body (3) are distinct components.

3. System according to any one of the previous claims, **characterised in that** said first filtering means (7) is part of said filtering body (3).

4. System according to any one of the previous claims, **characterised in that** said first filtering means (7) is at least partially restrained in a known manner at least to one of said positioning element (8) and filtering body (3).

5. System according to the previous claim 4, **characterised in that** this at least partial restraint is formed by means of at least one continuous or discontinuous known connection system.

6. System according to claim 4, **characterised in that** said at least partial restraint is formed by means of at least one disassemblable or permanent known connection system.

7. System according to any one of the previous claims, **characterised in that** said first filtering means (7) is at least partially inside either said conduit (6) or in any case said filtering body (3).

8. System according to any one of the previous claims, **characterised in that** said conduit (6) traverses completely said filtering body (3) and is therefore passing therein.

9. System according to any one of the previous claims, **characterised in that** at least one of said filtering body (3) and positioning element (8) is formed by several distinct parts.

10. System according to any one of the previous claims, **characterised in that** said positioning element (8) is a support or stand.

11. System according to any one of the previous claims, **characterised in that** said positioning element is a base.

12. System according to any one of the previous claims, **characterised in that** said positioning element (8) defines at least partially at least part of a cavity or hole or opening, and said first filtering means (7) is at least partially inserted in said cavity or hole or opening.

13. System according to any one of the previous claims, **characterised in that** said conduit (6) is at least partially closed either by means of at least one component distinct from said filtering body (3) or by means of the configuration of the same filtering body (3).

14. System according to any one of the previous claims, **characterised in that** said filtering body (3) is at least partially cylindrical.

15. System according to any one of the previous claims, **characterised in that** said first filtering means (7) is a mesh constituted at least partially by plaited wire and in metal or plastic or vitreous material or another suitable material.

16. System according to any one of the previous claims, **characterised in that** it comprises at least one means for attachment belonging either to said filtering body (3) or to said positioning element (8), preferably set up for a bayonet connection and suitable for attachment with another external system.

17. Process for the use of the system as claimed in any one of the previous claims, **characterised in that** it comprises at least the following steps:
- at least part of the mixture traverses at least partially said first filtering means (7);
- at least part of at least one substance separated by this first filtering means moves with respect thereto due to gravity or due to another cause, and subsequently comes into contact with said inclined surface (11);
- at least part of this substance separated by the aggregate, acquires, due to gravity or due to another cause, a velocity relative to the flow of the mixture, the component of that velocity along the course and in the direction of said flow being negative, and moves on said inclined surface towards the entry section of the recovery means (12), to then enter the same;
- at least part of said mixture enters at least partially the conduit (6) defined by the filtering body (3);
- at least part of said mixture exits therefrom traversing at least partially the relative filtering surface.
